# EUROPEAN PATENT SPECIFICATION

(11) **EP 4 589 695 B1**
(45) Date of publication and mention of the grant of the patent: **07.10.2026**
(21) Application number: 25150133.4
(22) Date of filing: 03.01.2025
(51) Int. Cl.: H01M 4/66, H01M 10/0585, H01M 50/54, H01M 50/534, H01M 50/105

(54) **ELECTRODE PLATE, ELECTRODE ASSEMBLY AND RECHARGEABLE BATTERY INCLUDING THE ELECTRODE ASSEMBLY**
ELEKTRODENPLATTE, ELEKTRODENANORDNUNG UND WIEDERAUFLADBARE BATTERIE MIT DER ELEKTRODENANORDNUNG
PLAQUE D'ÉLECTRODE, ENSEMBLE ÉLECTRODE ET BATTERIE RECHARGEABLE COMPRENANT L'ENSEMBLE ÉLECTRODE

(30) Priority: 19.01.2024 KR 20240009105
(43) Date of publication of application: 23.07.2025
(73) Proprietor: SAMSUNG SDI CO., LTD., Yongin-si, Gyeonggi-do 17084 (KR)
(72) Inventor: CHOI, Jinkyu, 17084 Yongin-si, Gyeonggi-do (KR)
(74) Representative: Michalski Hüttermann & Partner mbB

(56) References cited:
- DE-A1- 102022 124 854
- US-A1- 2009 017 376
- US-A1- 2023 187 655

## Description

### BACKGROUND OF THE INVENTION

### (a) Field of the Invention

The present disclosure relates to an electrode plate, an electrode assembly, and a rechargeable battery including the electrode assembly.

### (b) Description of the Related Art

A rechargeable battery is manufactured in various shapes. A pouch-type battery typically includes an electrode assembly formed of or including a positive electrode plate, a negative electrode plate, and an insulator separator between the positive electrode plate and the negative electrode plate, and a thin flexible pouch in which the electrode assembly is embedded. In this case, the pouch accommodates the electrode assembly in an inner space.

The electrode assembly of the rechargeable battery is largely divided into winding type and stacking type depending on its structure. The stacking type has good structural safety and improved spatial utility, and thus the stacking type rechargeable battery is widely applied to a small and medium-sized product. The stacking-type rechargeable battery is a stack of a plurality of electrode plates and a separator.

A current collecting layer applied to electrodes, that is, a positive electrode and a negative electrode of the rechargeable battery may usually be a thin film with electrical conductivity such as copper (Cu), aluminum (Al), nickel (Ni), or stainless steel (SUS). For example, in the case of a commercially available lithium ion battery, a copper foil current collecting layer is typically used for the negative electrode and an aluminum foil current collecting layer is typically used for the positive electrode.

In some cases, in order to lower the manufacturing cost and reduce the weight of rechargeable batteries, the current collecting layer is not manufactured entirely from copper or aluminum, but a current collecting layer with a metal layer applied to both sides of a resin is also used.

In a resin metal composite substrate, metal layers are on both sides of the resin sheet, and the resin has a low conductivity, and as a result a disadvantage occurs in that the metal layers on both sides do not conduct electricity to each other.

Document US 2023/0187655 A1 relates to a composite current collector that includes a support layer and a conductive layer. The support layer has two surfaces opposite to each other along a thickness direction. The conductive layer is provided on the two surfaces and includes a first portion and a second portion.

Document DE 2020 124 854 A1 describes concepts that provide a hybrid metal/polymer current collector for a battery cell electrode, comprising a collector body connected to a tab section and encapsulated in an electrically conductive coating, as well as an associated manufacturing process.

Document US 2009/0017376 A1 describes a battery A battery including an electrode and electrode terminal, the electrode comprising a multilayered collector assembly having a multilayered portion that includes an insulation layer and two electrically conductive layers disposed on opposite sides of the insulation layer, and a conductive portion made of an electrically conductive material, connected to the two conductive layers and extending therefrom more toward a side end of the electrode than a side end of the insulation layer so as to be electrically connected to the electrode terminal, and a pair of active material layers disposed on opposite sides of the multilayered portion.

### SUMMARY OF THE INVENTION

The present disclosure is intended to address the disadvantages described above, and example embodiments include an electrode plate that can implement conductivity between adjacent electrode plates, an electrode assembly, and a rechargeable battery including the electrode assembly.

The invention is defined by the features of the independent claims. Preferred embodiments are described by the features of the dependent claims.

An electrode plate according to an example embodiment of the present disclosure includes a base layer, a first conductive layer, a current collecting layer including a first conductive layer and a second conductive layer respectively located on an upper surface and a lower surface of the base layer, and an electrode plate layer on at least one side of the current collecting layer, wherein a portion of the first conductive layer and a portion of the second conductive layer extending beyond the base layer are coupled to each other.

The base layer may include a body portion; and an inclined portion that is integrated with the body portion, a thickness of the inclined portion gradually decreases toward the end.

The current collecting layer may include a current collecting portion having an electrode plate layer on at least one side, and an uncoated region extending to the outside from the current collecting portion, and a portion of the first conductive layer and a portion of the second conductive layer may extend beyond the uncoated region, and ends thereof may be coupled to each other.

The base layer may include at least one of poly amide, poly imide, poly butylene terephthalate, polyethylene naphthalate, poly carbonate, polyethylene, polypropylene, polyethylene propylene, acrylo nitrile-butadiene-styrene copolymer, poly vinyl alcohol, poly styrene, poly chloride vinyl, poly vinylidene fluoride, poly tetra fluoro ethylene, poly styrene sulfonate sodium, poly acetylene, silicon rubber, poly oxy methylene, poly phenylene ether, poly phenylene sulfide, polyethylene glycol, poly sulfur nitride, poly phenylene, polypyrrole, poly aniline, polythiophene, polypyridine, cellulose, farinaceous, protein, epoxy resin, phenol resin, a derivative thereof, a replacement of the above- stated material, and a copolymer thereof.

The base layer may further include an additive, wherein the additive may include one or more of a metal material and an inorganic non-metal material.

The first conductive layer and the second conductive layer may contain aluminum.

The first conductive layer and the second conductive layer may contain one or more of nickel, copper, iron, and alloys containing at least nickel, copper and iron.

The first conductive layer and the second conductive layer may contain one or more of a metal material, a carbon-based conductive material, and a conductive polymer material.

An electrode assembly according to the invention includes a plurality of electrode plates and a separator, the plurality of electrode plates are stacked with the separator therebetween, and at least one of the plurality of electrode plates includes a current collecting layer including a base layer, a first conductive layer and a second conductive layer, wherein the first and the second conductive layers are disposed on an upper surface and a lower surface of the base layer respectively, wherein the first and second conductive layers extend longer than the base layer and are at least partially combined with each other, and an electrode plate layer in a portion the current collecting layer.

A thickness of one end of the base layer may gradually decrease.

The base layer may include a body portion and an inclined portion that is integrated with the body portion, a thickness of which gradually decreases toward the end.

Current collecting layers contained in the plurality of electrode plates are combined with each other.

The current collecting layer may include a current collecting portion having an electrode plate layer on at least one side, and an uncoated region extending to the outside from the current collecting portion.

The plurality of electrode plates may include a first electrode plate and a second electrode plate.

The base layer may include at least one of poly amide, poly imide, poly butylene terephthalate, polyethylene naphthalate, poly carbonate, polyethylene, polypropylene, polyethylene propylene, acrylo nitrile-butadiene-styrene copolymer, poly vinyl alcohol, poly styrene, poly chloride vinyl, poly vinylidene fluoride, poly tetra fluoro ethylene, poly styrene sulfonate sodium, poly acetylene, silicon rubber, poly oxy methylene, poly phenylene ether, poly phenylene sulfide, polyethylene glycol, poly sulfur nitride, poly phenylene, polypyrrole, poly aniline, polythiophene, polypyridine, cellulose, farinaceous, protein, epoxy resin, phenol resin, a derivative thereof, a replacement of the above- stated material, and a copolymer thereof.

The base layer includes an additive, wherein the additive may include one or more of a metal material and an inorganic non-metal material.

The first conductive layer and the second conductive layer may contain aluminum.

The first conductive layer and the second conductive layer may contain one or more of nickel, copper, iron, and alloys thereof.

The first conductive layer and the second conductive layer may contain one or more of a metal material, a carbon-based conductive material, and a conductive polymer material.

A rechargeable battery according to an example embodiment includes an electrode assembly and a case accommodating the electrode assembly.

According to example embodiments, in the current collecting layer included in the electrode assembly, parts of the first conductive layer and the second conductive layer are coupled with each other. Accordingly, a plurality of electrode plates can be electrically connected to each other.

Accordingly, the electrode assembly according to an example embodiment does not need to perform a conduction process that requires additional folding of foil and insertion between electrode plates one by one, as discussed above. Therefore, not only can the manufacturing time be shortened, but the manufacturing cost can also be reduced.

### BRIEF DESCRIPTION OF THE DRAWINGS

The following drawings attached to this specification illustrate example embodiments of the present disclosure, and together with the detailed description of the invention described later, serve to further understand the technical idea of the present disclosure, and thus the example embodiments should not be construed as limited to the matters described in such drawings.
FIG. 1 is a perspective view of a rechargeable battery in which an electrode plate and an electrode assembly including the electrode plate according an example embodiment are installed.
FIG. 2 is a cross-sectional view of a state in which the plurality of electrode plates are coupled to each other.
FIG. 3 is a perspective view of the electrode plate of the rechargeable battery of FIG. 1.
FIG. 4 is a cross-sectional view that illustrates a process of manufacturing the current collecting layer of the electrode plate of FIG. 3.
FIG. 5 is a cross-sectional view of a current collecting layer according to an example variation.
FIG. 6 and FIG. 7 show a process for manufacturing an electrode assembly.

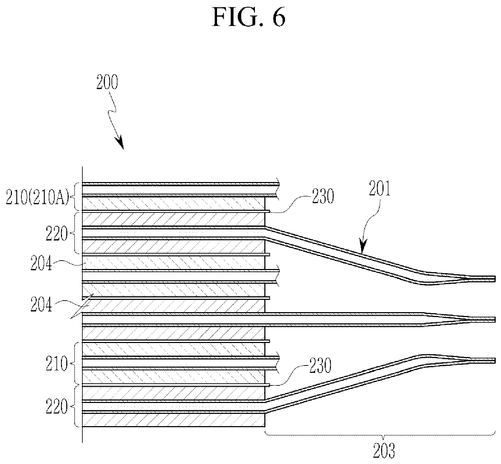

FIG. 6 is a cross-sectional view of electrode plates in parallel in the vertical direction.

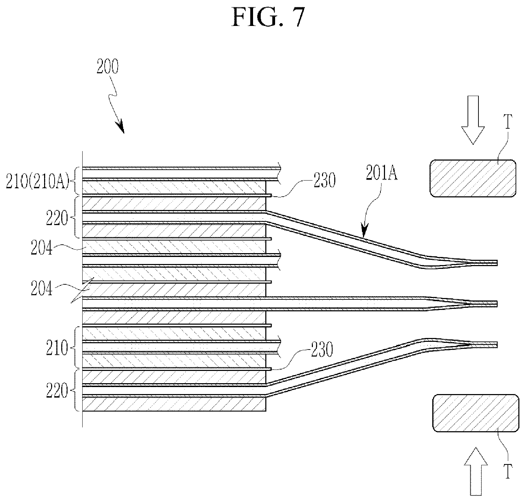

FIG. 7 is a cross-sectional view of a process of welding the uncoated regions of the plurality of current collecting layers respectively by ultrasonic welding.

### DETAILED DESCRIPTION OF THE EMBODIMENTS

Hereinafter, example embodiments of the present disclosure will be described in detail with reference to the attached drawings. Prior to the detailed description of the example embodiments, the terms or words used in this specification and claims range described below should not be construed as being limited to conventional or dictionary meanings, and the inventor should be interpreted as meaning and concept consistent with the technical idea of the present disclosure based on the principle that it can be appropriately defined as a concept of a term to describe his/her own invention in the best way. Therefore, example embodiments described in the present specification and the configurations shown in the drawings are only example embodiments of the present disclosure, and do not represent all the technical features of the present disclosure.

In addition, when used in this specification, "comprise, include" and/or "comprising, including" refers to specify the presence of the mentioned shapes, numbers, steps, operations, members, elements and/or these groups, and it does not exclude the presence or addition of one or more other shapes, numbers, movements, members, elements and/or groups.

In addition, to aid understanding of the invention, the attached drawings may not be drawn to actual scale, but the dimensions of some components may be exaggerated. Further, the same reference number may be assigned to the same component in another embodiment.

The statement that two objects of comparison are "the same" means "substantially the same". Therefore, substantial identity may include a deviation that is considered low in the industry, for example, a deviation of less than 5 %. In addition, uniformity of a parameter in a given region may mean uniformity from an average perspective.

Although first, second, and the like are used to describe various configurations elements, these components are of course not limited by these terms. These terms are only used to distinguish one component from another component, and unless specifically stated to the contrary, a first component may also be a second component.

Throughout the specification, unless otherwise stated, each component may be singular or plural.

The placement of any component on the "upper portion (or lower portion)" of a component or the "top (or bottom)" of a component means not only that any component may be placed in contact with an upper surface (or lower surface) of the component but also that that other configurations may be interposed between and any configuration placed on (or under) the component.

In addition, when a component is described as "on," "connected to," or "coupled to" another component, the components may be directly connected or connected to each other. However, it should be understood that other components may be "disposed" between each component, or that each component may be "connected," "coupled," or "accessed" through other components.

As used in this specification, the term "and/or" includes any and all combinations of one or more of the associated listed items. In addition, the use of "may" when describing embodiments of the present disclosure refers to "one or more embodiments of the present disclosure."

Expressions such as "one or more" and "one or more" preceding a list of elements modify the entire list of elements and do not modify individual elements in the list.

When the expression "A and/or B" is used throughout the specification, it means A, B, or A and B, unless specifically stated to the contrary, and the expression "C to D" means that it is higher than C and lower than D unless specifically stated to the contrary.

When a syntax like "at least one selected from A, B and C", "at least one selected from A, B or C", "at least one selected from A, B and C group" and "at least one selected from A, B and C" is used to specify a list of elements A, B, and C, the syntax may refer to any and all suitable combinations.

The term "use" may be considered synonymous with the term "utilize."

As used in this specification, "substantially," "approximately," and similar terms are used as terms of approximation rather than terms of degree and for consideration of inherent variations in measured or calculated values as would be recognized by a person of ordinary skill in the art.

In this specification, the terms first, second, third, and the like may be used to describe various elements, components, regions, layers and/or sections, but these elements, components, regions, layers and/or sections should not be limited by these terms. This term is used to distinguish one element, component, region, drawing layer or cross-section from another element, component, region, drawing layer or cross-section. Accordingly, the first element, component, region, layer or section discussed below may be named a second element, component, region, layer or section without departing from the teachings of the example embodiments.

As shown in the drawing, to describe the relationship between one element or feature and other element(s) or feature(s), for ease of description, spatial relative terms such as "beneath," "below," "lower", "above", "upper", and the like may be used in this specification. The spatially relative position will be understood to encompass different directions of a device in use or operation in addition to the direction depicted in the figures. For example, when the device in the drawing is flipped, an element described as "below" or "bottom" is understood to be "above" or "above" another element. Therefore, the term "below" may encompass both up and down directions.

The terms used in this specification are intended to describe example embodiments of the present disclosure and are not intended to limit the present disclosure.

Hereinafter, a rechargeable battery including an electrode plate will be described in detail before describing the electrode plate according to an example embodiment of the present disclosure.

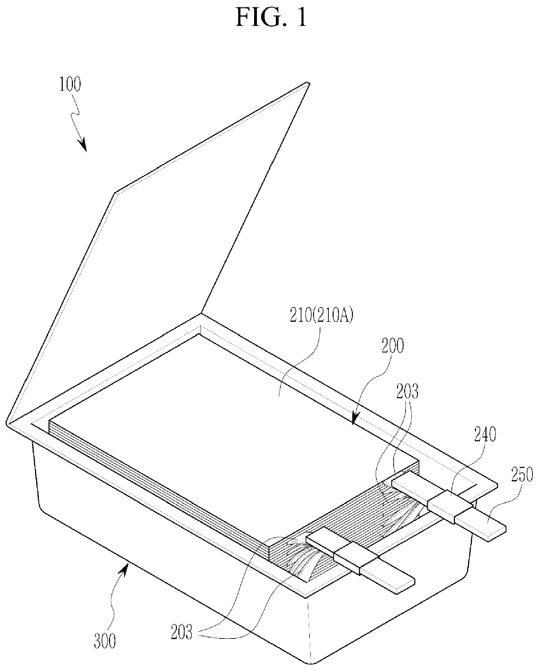

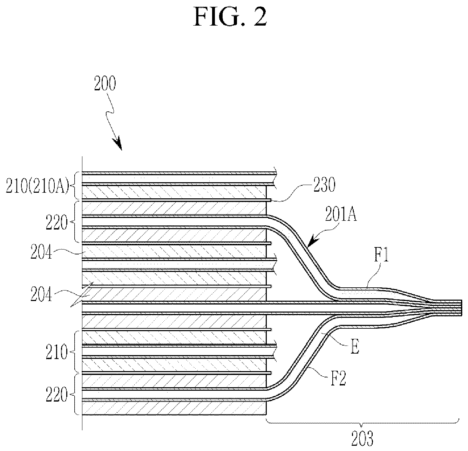

FIG. 1 is a perspective view of a rechargeable battery in which an electrode plate according to an example embodiment of the present disclosure and an electrode assembly including the electrode assembly can be installed, and FIG. 2 is a cross-sectional view of a state in which a plurality of electrode plates are coupled to each other.

Referring to FIG. 1 and FIG. 2, a rechargeable battery 100 may include an electrode assembly 200 and a case 300.

The electrode assembly 200 includes a plurality of electrode plates 210 and 220 and a separator 230. More specifically, the plurality of electrode plates 210 and 220 may include a first electrode plate 210 and a second electrode plate 220.

The electrode assembly 200 may be or include a laminate including the first electrode plate 210, the second electrode plate 220, and the separator 230 and repeatedly wound or stacked.

For example, the electrode assembly 200 may be a stacked type electrode assembly in which the electrode plates 210 and 220 are arranged to be stacked in multiple layers. Alternatively, the electrode assembly 200 may be a repeatedly wound jelly-roll type. **In** example embodiments, the electrode assembly 200 is a stacked type as an example.

Meanwhile, a manufacturing process of the stacked type electrode assembly 200 generally involves a primary stacking process and a secondary process.

**In** the primary stacking process, a full cathode and a full anode may be stacked. Here, the full cathode may be or include the first electrode plates 210 except the outermost first electrode plate 210A. In addition, the full anode may be the second electrode plate 220.

In the secondary lamination process, a half cathode may be laminated on one or more of the lateral outermost sides thereof using the lamination direction as a reference. For example, the half cathode may be or include the outermost first electrode plate 210A among the first electrode plates 210.

For convenience of description, in FIG. 2, the electrode assembly 200 includes a half cathode stacked on the outermost of the electrode assembly 200, it may also be possible that the half cathode is stacked on the upper outermost and lateral outermost sides of the electrode assembly 200, respectively.

Here, the full cathode and the full anode are those in which active material is applied to both sides of the substrate, and the half cathode is one in which the electrode layer is positioned on only one side of the current collecting layer. Here, the electrode plate layer may be or include an active material layer. Detailed descriptions of such full cathodes, full anodes, and half cathodes will be omitted.

The separator 230 may be located between the first electrode plate 210 and the second electrode plate 220. The separator 230 may reduce or prevent a short circuit between the first electrode plate 210 and the second electrode plate 220, and enables the movement of lithium ions. To this end, the separator 230 may be relatively larger in size than the first electrode plate 210 or the second electrode plate 220.

A material of the separator 230 may be or include, for example, at least one of polyethylene, polypropylene, or a composite film of polyethylene and polypropylene, but is not limited thereto.

The separator 230 may be cut to unit length and placed between the first electrode plate 210 and the second electrode plate 220, or a single separator 230 having a ribbon shape may be placed in a zigzag pattern between the first electrode plate 210 and the second electrode plate 220. Alternatively, the separator 230 may be wound in one direction between the first electrode plate 210 and the second electrode plate 220. The configuration of the separator 230 is not limited to a specific configuration.

The case 300 may accommodate or include the electrode assembly 200. The electrode assembly 200 described above may be accommodated or included in the case 300 together with an electrolyte solution.

The case 300 described above may be one of pouch type, cylindrical type, and square type case. The pouch-type case 300 may be manufactured by bending plate-shaped exterior materials to face each other, then pressing or drawing one side, and including a recess on one side.

The electrode assembly 200 is accommodated or included in the recess (not shown). A sealing portion is provided on an exterior circumferential surface of the recess, and with the electrode assembly 200 accommodated in the recess, the sealing portion is sealed using a method such as, e.g., heat coalesce.

Meanwhile, in the plurality of electrode plates 210 and 220, the above-described first electrode plate 210 may be or include a negative electrode, and the second electrode plate 220 may be or include an anode, or vice versa. The first electrode plate 210 and the second electrode plate 220 may be electrically connected to the outside of the rechargeable battery 100 through a strip terminal 250. In addition, an insulation tape 240 may be attached to a portion of the strip terminal 250 that is in contact with the case 300. The insulation tape 240 may hinder or prevent the strip terminal 250 and the case 300 from being electrically connected.

Hereinafter, the electrode assembly 200 according to an example embodiment of the present disclosure will be described in more detail with reference to the drawings.

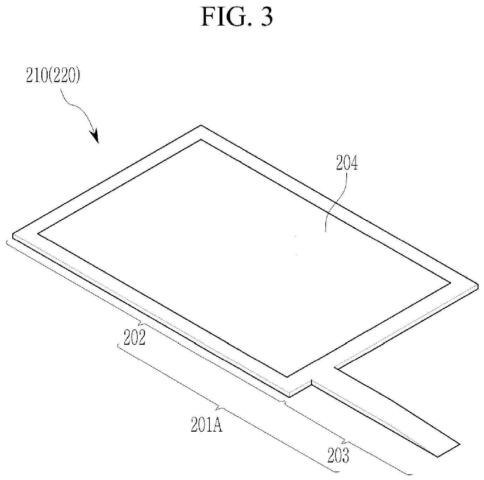

FIG. 2 is a cross-sectional view of a state in which the plurality of electrode plates are coupled to each other, and FIG. 3 is a perspective view of the electrode plate of the rechargeable battery of FIG. 1.

Referring to FIG. 2 and FIG. 3, as described above, the electrode assembly 200 according to an example embodiment includes the plurality of electrode plates 210 and 220, and each of the plurality of electrode plates 210 and 220 includes a current collecting layer 201A and an electrode plate layer 204 disposed in a portion of the current collecting layer 201A. In this example, the electrode plate layer 204 may be or include an electrode active material layer used in a general rechargeable battery, and thus a detailed description thereof is omitted.

The current collecting layer 201A includes a base layer E, a first conductive layer F1, and a second conductive layer F2 on upper and lower surfaces of the base layer E, respectively, using an internal structure as a reference.

The base layer E may include, for example, polyethylene terephthalate (PET).

Alternatively, the base layer E may include, for example, at least one of poly amide, poly imide, poly butylene terephthalate, polyethylene naphthalate, poly carbonate, polyethylene, polypropylene, polyethylene propylene, acrylo nitrile-butadiene-styrene copolymer, poly vinyl alcohol, poly styrene, poly chloride vinyl, poly vinylidene fluoride, poly tetra fluoro ethylene, poly styrene sulfonate sodium, poly acetylene, silicon rubber, poly oxy methylene, poly phenylene ether, poly phenylene sulfide, polyethylene glycol, poly sulfur nitride, poly phenylene, polypyrrole, poly aniline, polythiophene, polypyridine, cellulose, farinaceous, protein, epoxy resin, phenol resin, a derivative of the above-described material, a replacement of the above-described material, and a copolymer of the above-described material.

According to the invention, the base layer E further includes additives. The additives contain one or more of a metal material and an inorganic non-metal material.

For example, the metal material additive may be or include one or more of aluminum, an aluminum alloy, copper, a copper alloy, nickel, a nickel alloy, titanium, a titanium alloy, iron, an iron alloy, silver, and a silver alloy.

In addition, the inorganic non-metal material additive is or includes one or more of, for example, a carbon-based material, oxidation aluminum, silicon oxide, silicon nitride, carbonization silicon, nitride boron, silicic acid salt, and oxidation titanium, and one or more of, for example, a glass material, a ceramic material, and a ceramic composite material. The carbon-based material additive may be or include, for example, one or more of graphite, superconducting carbon, acetylene black, carbon black, Ketjen black, carbon dot, carbon nanotube, graphene, and carbon nanofiber.

Meanwhile, the additive may further include a carbon-based material applied by a metal material. For example, the carbon-based material may be or include one or more of graphite powder coated with nickel and carbon fiber coated with nickel.

In examples, the first conductive layer F1 and the second conductive layer F2 may include aluminum. For example, the first conductive layer F1 and the second conductive layer F2 may include one or more of a metal material, a carbon-based conductive material, and a conductive polymer material.

As illustrated in FIG. 3, the current collecting layer 201A may include a current collecting portion 202 and an uncoated region 203 using an external shape as a reference.

The electrode plate layer 204 is on at least one side of the current collecting unit 202. The current collecting portion 202 may have, for example, a plate shape of a quadrangular shape. As shown in the example of FIG. 3, the electrode plate layer 204 may be in the remaining portion of the current collecting portion 202 but not at an edge region of the current collecting portion. Alternatively, although not shown in the drawing, the electrode plate layer 204 may be located throughout the current collecting portion 202.

The uncoated region 203 extends outward from the current collecting portion 202. The uncoated region 203 may be a portion where the electrode plate layer 204 is not positioned. The uncoated region 203 may have, for example, a ribbon shape.

According to the invention, the plurality of electrode plates 210 and 220 include the first electrode plate 210 and the second electrode plate 220, and a portion of the first conductive layer F1 and a portion of the second conductive layer F2 extend beyond the base layer E and are combined with each other in each current collecting layer 201A of the first electrode plate 210 and the second electrode plate 220. As shown in FIG. 2, a portion of the first conductive layer F1 and a portion of the second conductive layer F2 extend beyond the uncoated region 203, and the ends of the first conductive layer F1 and of the second conductive layer F2 are joined to each other.

Accordingly, when the current collecting layers 201A of the plurality of first electrode plate 210 are combined with each other, the plurality of first electrode plate 210 may be electrically connected. In addition, when the current collecting layers 201A of the plurality of second electrode plates 220 are combined with each other, the plurality of second electrode plates 220 may also be electrically connected.

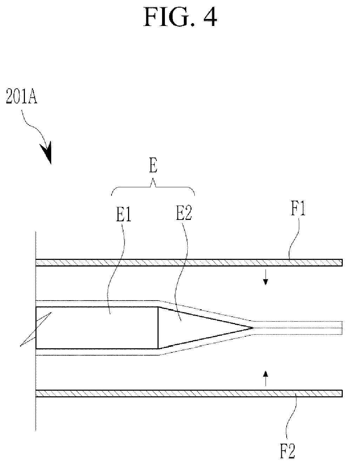

FIG. 4 is a cross-sectional view that illustrates a process of manufacturing the current collecting layer of the electrode plate of FIG. 3.

Referring to FIG. 4, the base layer E included in the current collecting layer 201A may include a body portion E1 and an inclined portion E2.

The body portion E1 has a substantially uniform thickness, unlike the inclined portion E2, which will be described later. The body portion E1 may be disposed in substantially the entire current collecting portion 202, and in a portion of the body portion E1. In another example, although not shown in the drawing, it may be possible for the body portion E1 to be positioned only in the current collecting portion 202.

The inclined portion E2 may be integrated with the body portion E1, and a thickness thereof gradually decreases toward the end. The shape of the vertical cross-section of the inclined portion E2 may be, for example, a triangle. The inclined portion E2 may extend from the current collecting layer 201A to a portion adjacent to an end of the uncoated region 203. Alternatively, the end of the inclined portion E2 may be at a middle portion of the uncoated region 203, and the remaining portion of the uncoated region 203 may be configured to combine the first conductive layer F1 and the second conductive layer F2.

As described above, a region where each of the body portion E1 and the inclined portion E2 in the current collecting layer 201A is located may vary depending on the design of the electrode assembly 200, and therefore the region is not limited to a specific location. In examples, it may be advantageous for the body portion E1 to be located in a large portion of the current collecting layer 201A in order to increase the rigidity of the current collecting layer 201A.

In examples, the above-described first conductive layer F1 and second conductive layer F2 are located on both sides of the body portion E1 and the inclined portion E2, and parts of the ends thereof are joined to each other, and thus the first conductive layer F1 and the second conductive layer F2 are electrically connected.

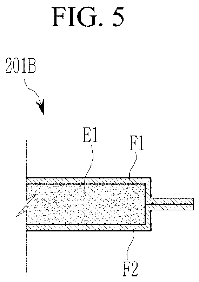

FIG. 5 is a cross-sectional view of a current collecting layer according to an example variation.

Referring to FIG. 5, a current collecting layer 201B according to an example variation may only include a body portion E1 without the inclined portion E2 unlike the example current collecting layer 201A illustrated in FIG. 4. The current collecting layer 201B according to the example variation may have a simpler manufacturing process than the current collecting layer 201A described above.

Referring back to FIG. 2, the plurality of electrode plates 210 and 220 are combined with each other according to the invention and may be adjacent to each other in the vertical direction between the uncoated regions 203.

In examples, when the electrode assembly 200 is a stacked type electrode assembly, the first electrode plate 210 and the second electrode plate 220 may be stacked alternately with a separator 230 therebetween. The first electrode plate 210 and the second electrode plate 220 may be provided in plurality. Although FIG. 2 illustrates three first electrode plates 210 and three second electrode plates 220, the number of first electrode plates 210 and the number of second electrode plates 220 may vary depending on the design of the rechargeable battery 100.

In the electrode assembly 200 according to an example embodiment, uncoated regions 203 of the first electrode plate 210 are located side by side in the vertical direction, and uncoated regions 203 of the second electrode plate 220 are located side by side in a horizontal direction and in the vertical direction. Although not shown in the drawing, the uncoated region 203 of the first electrode plate 210 may be spaced apart from the uncoated region 203 of the second electrode plate 220 in the horizontal or lateral directions.

In examples, the uncoated regions 203 described above may be joined together by, e.g., welding. For example, the plurality of uncoated regions 203 may be collected and joined by welding methods such as, e.g., laser, resistance welding, and ultrasonic welding.

In examples, a length of the uncoated region 203 is not limited to a specific value, and any length that allows the uncoated regions 203 to be combined with each other may be sufficient. Since the length of the uncoated region 203 may vary depending on the design of the electrode assembly 200, the length is not limited to a specific value.

Because an electrode plate included in the aforementioned electrode assembly 200 includes a current collecting layer 201A in which portions of the first conductive layer F1 and the second conductive layer F2 are combined with each other, the plurality of electrode plates 210 and 220 may be electrically conducted by welding, e.g., conducted only by welding, the uncoated regions 203 together.

A manufacturing process of the electrode assembly 200 according to the above example embodiment will be described with reference to the drawing.

FIG. 6 and FIG. 7 show a process for manufacturing an electrode assembly.

FIG. 6 is a cross-sectional view of an electrode assembly having electrode plates located in parallel in the vertical direction.

Referring to FIG. 6, the first electrode plate 210 and the second electrode plate 220 are stacked, or arranged in a stacking configuration. The first electrode plate 210 and the second electrode plate 220 may be stacked, e.g., sequentially stacked, with a separator 230 therebetween.

FIG. 7 is a cross-sectional view of a process of welding the uncoated regions of the plurality of current collecting layers via ultrasonic welding.

Referring to FIG. 7, a plurality of second electrode plates 220 may be welded to the uncoated region 203 by a welding horn T that is typically used in ultrasonic welding. In this example, since the first conductive layer F1 and the second conductive layer F2 of the current collecting layer 201A of the plurality of second electrode plates 220 are electrically connected to each other, substantially all of the second electrode plate 220 may be electrically connected. **In** addition, although not shown in the drawing, substantially the plurality of first electrode plates 210 may also be electrically connected to each other.

**In** a conventional rechargeable battery containing a resin metal composite substrate, welding the uncoated region of the electrode is challenging because the uncoated region contacts only one side of the metal layer. **In** order to overcome this challenge, the manufacturing process may necessitate an additional operation of performing a conduction process for achieving conduction through the metal layers.

As described above, the electrode assembly 200 according to an example embodiment may electrically connect the first electrode plates 210 to each other and the second electrode plates 220 to each other electrically using an ultrasonic welding method, even without performing a separate conduction process.

**In** examples, the electrode assembly 200 according to an example embodiment does not need to perform a conduction process that requires additional folding of foils and individually inserting the foils between electrode plates. Therefore, not only can the manufacturing time be shortened, but the manufacturing cost can also be reduced.

While examples of this invention have been described in connection with what is presently considered to be practical example embodiments, it is to be understood that the invention is not limited to the disclosed example embodiments. On the contrary, the example embodiments are intended to cover various modifications and equivalent arrangements included within the scope of the appended claims. Therefore, those of ordinary skill in the art will understand that numerous variations and equivalent other example embodiments are possible from this. Therefore, the true technical protection range of examples the present invention should be determined by the technical idea of the attached patent claim range.

### <Description of symbols>

| | | | |
|---|---|---|---|
| 100: | rechargeable battery | 200: | electrode assembly |
| 201A, 201B: | current collecting layer | 202: | current collecting portion |
| 203: | uncoated region | 204: | electrode plate layer |
| 210: | first electrode plate | 220: | second electrode plate |
| 230: | separator | 300: | case |
| E: | base layer | E1: | body portion |
| E2: | inclined portion | F1: | first conductive layer |
| F2: | second conductive layer | | |

## Claims

1. An electrode assembly (200) comprising a plurality of electrode plates (210, 220) and a separator (230), the plurality of electrode plates (210, 220) being stacked with the separator (230) therebetween,
wherein at least one of the plurality of electrode plates (210, 220) comprises:
a current collecting layer (201A) including a base layer (E), a first conductive layer (F1) and a second conductive layer (F2), wherein the first and second conductive layers (F1, F2) are disposed on an upper surface and a lower surface of the base layer (E), respectively, wherein the first and second conductive layers (F1, F2) extend longer than the base layer (E), and are at least partially combined with each other; and
an electrode plate layer (204) in a portion of the current collecting layer (201A),
wherein current collecting layers (201A) contained in the plurality of electrode plates (210, 220) are combined with each other,
**characterized in that**
the base layer (E) comprises an additive, wherein the additive comprises one or more of a metal material and an inorganic non-metal material.

2. The electrode assembly (200) according to claim 1, wherein the base layer (E) comprises:
a body portion (E1); and
an inclined portion (E2) that is integrated with the body portion (E1), wherein a thickness of the inclined portion (E2) gradually decreases toward an end thereof.

3. The electrode assembly (200) according to claims 1 or 2, wherein the base layer (E) comprises at least one of poly amide, poly imide, poly butylene terephthalate, polyethylene naphthalate, poly carbonate, polyethylene, polypropylene, polyethylene propylene, acrylo nitrile-butadiene-styrene copolymer, poly vinyl alcohol, poly styrene, poly chloride vinyl, poly vinylidene fluoride, poly tetra fluoro ethylene, poly styrene sulfonate sodium, poly acetylene, silicon rubber, poly oxy methylene, poly phenylene ether, poly phenylene sulfide, polyethylene glycol, poly sulfur nitride, poly phenylene, polypyrrole, poly aniline, polythiophene, polypyridine, cellulose, farinaceous, protein, epoxy resin, phenol resin, a derivative thereof, a replacement thereof, and a copolymer thereof.

4. The electrode assembly (200) according to any of the previous claims, wherein at least one of the first conductive layer (F1) and the second conductive layer (F2) comprises aluminum.

5. The electrode assembly (200) according to any of the previous claims, wherein at least one of the first conductive layer (F1) and the second conductive layer (F2) comprises one or more of nickel, copper, iron, and alloys thereof.

6. The electrode assembly (200) according to any of the previous claims, wherein at least one of the first conductive layer (F1) and the second conductive layer (F2) comprises one or more of a metal material, a carbon-based conductive material, and a conductive polymer material.

7. The electrode assembly (200) according to any of the previous claims, wherein a thickness of one end portion of the base layer (E) gradually decreases.

8. The electrode assembly (200) according to any of the previous claims, wherein the current collecting layer (201A) comprises:
a current collecting portion (202), the electrode plate layer (204) being disposed on at least one side thereof; and
an uncoated region (203) extending to an outside portion of the current collecting portion (202).

9. The electrode assembly (200) according to any of the previous claims, wherein the plurality of electrode plates (210, 220) comprises a first electrode plate (210) and a second electrode plate (220).

10. A rechargeable battery (100) comprising:
an electrode assembly (200) configured according to any of claims 1 to 9; and
a case (300) containing the electrode assembly (200).

## Patentansprüche

1. Elektrodenanordnung (200), aufweisend mehrere Elektrodenplatten (210, 220) und einen Separator (230), wobei die mehreren Elektrodenplatten (210, 220) mit dem Separator (230) dazwischen gestapelt sind,
wobei mindestens eine der mehreren Elektrodenplatten (210, 220) aufweist:
eine Stromkollektorschicht (201A), die eine Basisschicht (E), eine erste leitfähige Schicht (F1) und eine zweite leitfähige Schicht (F2) aufweist, wobei die erste und die zweite leitfähige Schicht (F1, F2) auf einer oberen Fläche beziehungsweise einer unteren Fläche der Basisschicht (E) angeordnet sind, wobei die erste und die zweite leitfähige Schicht (F1, F2) sich weiter erstrecken als die Basisschicht (E) und zumindest teilweise miteinander kombiniert sind; und
eine Elektrodenplattenschicht (204) in einem Abschnitt der Stromkollektorschicht (201A),
wobei Stromkollektorschichten (201A), die in den mehreren Elektrodenplatten (210, 220) enthalten sind, miteinander kombiniert sind,
**dadurch gekennzeichnet, dass** die Basisschicht (E) ein Additiv aufweist, wobei das Additiv ein Metallmaterial und/oder ein anorganisches Nichtmetallmaterial aufweist.

2. Elektrodenanordnung (200) nach Anspruch 1, wobei die Basisschicht (E) aufweist:
einen Körperabschnitt (E1); und
einen geneigten Abschnitt (E2), der mit dem Körperabschnitt (E1) integriert ist, wobei eine Dicke des geneigten Abschnitts (E2) zu einem Ende davon hin allmählich abnimmt.

3. Elektrodenanordnung (200) nach Anspruch 1 oder 2, wobei die Basisschicht (E) Polyamid, Polyimid, Polybutylenterephthalat, Polyethylennaphthalat, Polycarbonat, Polyethylen, Polypropylen, Polyethylenpropylen, Acrylnitril-Butadien-Styrol-Copolymer, Polyvinylalkohol, Polystyrol, Polyvinylchlorid, Polyvinylidenfluorid, Polytetrafluorethylen, Natriumpolystyrolsulfonat, Polyacetylen, Silikonkautschuk, Polyoxymethylen, Polyphenylenether, Polyphenylensulfid, Polyethylenglykol, Polyschwefelnitrid, Polyphenylen, Polypyrrol, Polyanilin, Polythiophen, Polypyridin, Cellulose, mehlhaltiges Material, Protein, Epoxidharz, Phenolharz, ein Derivat davon, einen Ersatzstoff dafür und/oder ein Copolymer davon aufweist.

4. Elektrodenanordnung (200) nach einem der vorhergehenden Ansprüche, wobei die erste leitfähige Schicht (F1) und/oder die zweite leitfähige Schicht (F2) Aluminium aufweisen.

5. Elektrodenanordnung (200) nach einem der vorhergehenden Ansprüche, wobei die erste leitfähige Schicht (F1) und/oder die zweite leitfähige Schicht (F2) eines oder mehrere Elemente von Nickel, Kupfer, Eisen und Legierungen davon aufweisen.

6. Elektrodenanordnung (200) nach einem der vorhergehenden Ansprüche, wobei die erste leitfähige Schicht (F1) und/oder die zweite leitfähige Schicht (F2) ein Metallmaterial, ein kohlenstoffbasiertes leitfähiges Material und/oder ein leitfähiges Polymermaterial aufweisen.

7. Elektrodenanordnung (200) nach einem der vorhergehenden Ansprüche, wobei eine Dicke eines Endabschnitts der Basisschicht (E) allmählich abnimmt.

8. Elektrodenanordnung (200) nach einem der vorhergehenden Ansprüche, wobei die Stromkollektorschicht (201A) aufweist:
einen Stromkollektorabschnitt (202), wobei die Elektrodenplattenschicht (204) auf mindestens einer Seite davon angeordnet ist; und
einen unbeschichteten Bereich (203), der sich zu einem äußeren Abschnitt des Stromkollektorabschnitts (202) erstreckt.

9. Elektrodenanordnung (200) nach einem der vorhergehenden Ansprüche, wobei die mehreren Elektrodenplatten (210, 220) eine erste Elektrodenplatte (210) und eine zweite Elektrodenplatte (220) umfassen.

10. Wiederaufladbare Batterie (100), aufweisend:
eine Elektrodenanordnung (200) nach einem der Ansprüche 1 bis 9; und
ein Gehäuse (300), das die Elektrodenanordnung (200) enthält.

## Revendications

1. Ensemble électrodes (200) comprenant une pluralité de plaques d'électrodes (210, 220) et un séparateur (230), la pluralité de plaques d'électrodes (210, 220) étant empilées avec le séparateur (230) intercalé entre elles,
dans lequel au moins l'une parmi la pluralité de plaques d'électrodes (210, 220) comprend:
une couche collectrice de courant (201A) comprenant une couche de base (E), une première couche conductrice (F1) et une deuxième couche conductrice (F2), dans laquelle les première et deuxième couches conductrices (F1, F2) sont disposées respectivement sur une surface supérieure et une surface inférieure de la couche de base (E), dans laquelle les première et deuxième couches conductrices (F1, F2) s'étendent plus loin que la couche de base (E), et sont au moins partiellement combinées l'une à l'autre; et
une couche de plaque d'électrode (204) dans une partie de la couche collectrice de courant (201A),
dans lequel les couches collectrices de courant (201A) contenues dans la pluralité de plaques d'électrodes (210, 220) sont combinées les unes aux autres,
**caractérisé en ce que** la couche de base (E) comprend un additif, dans laquelle l'additif comprend un ou plusieurs éléments parmi un matériau métallique et un matériau inorganique non métallique.

2. Ensemble d'électrodes (200) selon la revendication 1, dans lequel la couche de base (E) comprend:
une partie corps (E1); et
une partie inclinée (E2) qui est intégrée à la partie corps (E1), dans laquelle l'épaisseur de la partie inclinée (E2) diminue progressivement vers une extrémité de celle-ci.

3. Ensemble d'électrodes (200) selon la revendication 1 ou 2, dans lequel la couche de base (E) comprend au moins un élément parmi le polyamide, les polyimides, le poly(téréphtalate de butylène), le poly(naphtalate d'éthylène), le polycarbonate, le polyéthylène, le polypropylène, le polyéthylène propylène, le copolymère acrylo-nitrile-butadiène-styrène, l'alcool polyvinylique, le polystyrène, le polychlorure de vinyle, le polyfluorure de vinylidène, le polytétrafluoréthylène, le polystyrène sulfonate de sodium, le polyacétylène, le caoutchouc silicone, le polyoxyméthylène, le polyphénylène éther, le poly(sulfure de phénylène), le polyéthylène glycol, le poly(nitrure de soufre), le poly(phénylène), le polypyrrole, le polyaniline, le polythiophène, la polypyridine, la cellulose, la matière farineuse, la protéine, la résine époxy, la résine phénolique, un dérivé de ceux-ci, un substitut de ceux-ci, et un copolymère de ceux-ci.

4. Ensemble d'électrodes (200) selon l'une quelconque des revendications précédentes, dans lequel au moins l'une parmi la première couche conductrice (F1) et de la deuxième couche conductrice (F2) comprend de l'aluminium.

5. Ensemble d'électrodes (200) selon l'une quelconque des revendications précédentes, dans lequel au moins l'une parmi la première couche conductrice (F1) et la deuxième couche conductrice (F2) comprend un ou plusieurs éléments parmi le nickel, le cuivre, le fer, et des alliages de ceux-ci.

6. Ensemble d'électrodes (200) selon l'une quelconque des revendications précédentes, dans lequel au moins l'une parmi la première couche conductrice (F1) et la deuxième couche conductrice (F2) comprend un ou plusieurs éléments parmi un matériau métallique, un matériau conducteur à base de carbone, et un matériau polymère conducteur.

7. Ensemble d'électrodes (200) selon l'une quelconque des revendications précédentes, dans lequel une épaisseur d'une partie d'extrémité de la couche de base (E) diminue progressivement.

8. Ensemble d'électrodes (200) selon l'une quelconque des revendications précédentes, dans lequel la couche collectrice de courant (201A) comprend:
une partie collectrice de courant (202), la couche de plaque d'électrode (204) étant disposée sur au moins un côté de celle-ci; et
une zone non revêtue (203) s'étendant à une partie extérieure de la partie collectrice de courant (202).

9. Ensemble d'électrodes (200) selon l'une quelconque des revendications précédentes, dans lequel la pluralité de plaques d'électrodes (210, 220) comprend une première plaque d'électrodes (210) et une deuxième plaque d'électrodes (220).

10. Batterie rechargeable (100) comprenant:
un ensemble d'électrodes (200) configuré selon l'une quelconque des revendications 1 à 9; et
un boîtier (300) comprenant l'ensemble d'électrodes (200).
